# EUROPEAN PATENT SPECIFICATION

(11) **EP 1 014 124 B1**
(45) Date of publication and mention of the grant of the patent: **13.11.2002**
(21) Application number: 99125282.6
(22) Date of filing: 18.12.1999
(51) Int. Cl.: G02B 6/16

(54) **Method of optical fibre grating fabrication**
Methode zur Herstellung von Gittern in optischen Fasern
Méthode de fabrication d'un réseau de fibre optique

(30) Priority: 21.12.1998 IT TO981064
(43) Date of publication of application: 28.06.2000
(73) Proprietor: Agilent Technologies, Inc. (a Delaware corporation), Palo Alto, CA 94303 (US)
(72) Inventor: Boschis, Laura, 10040 Almese (IT); Emelli, Enrico, 10094 Giaveno (IT); Rossotto, Oriana, 10040 Almese (IT); Tallone, Luigi, 12034 Paesana (Cuneo) (IT)
(74) Representative: Riederer Freiherr von Paar zu Schönau, Anton

(56) References cited:
- EP-A- 0 684 491
- EP-A- 0 880 042
- WO-A-98/36296
- MALO B ET AL: "APODISED IN-FIBRE BRAGG GRATING REFLECTORS PHOTOIMPRINTED USING A PHASE MASK" ELECTRONICS LETTERS,GB,IEE STEVENAGE, vol. 31, no. 3, 2 February 1995 (1995-02-02), pages 223-226, XP000504226 ISSN: 0013-5194
- SINGH H ET AL: "Apodized fiber Bragg gratings for DWDM applications using uniform phase mask" 24TH EUROPEAN CONFERENCE ON OPTICAL COMMUNICATION. ECOC '98 (IEEE CAT. NO.98TH8398), PROCEEDINGS OF ECOC '98 - 24TH EUROPEAN CONFERENCE ON OPTICAL COMMUNICATION, MADRID, SPAIN, 20-24 SEPT. 1998, pages 189-190 vol.1, XP000901091 1998, Madrid, Spain, Telefonica, Spain ISBN: 84-89900-14-0

## Description

This invention relates to the techniques of fabricating optical fibre gratings, such as optical fibre Bragg gratings.

For an general overview of such techniques reference can be made to the work by T. Erdogan, entitled "Fiber Grating Spectra", published in Journal of Lightwave Technology, Vol. 15, No. 8, August 1997, pages 1277 to 1294.

In particular the invention relates to the technique known as apodisation, also mentioned in the previous work and consisting in the essence in inducing along the fibre axis a refractive index increase whose envelope exhibits a particular spatial distribution such that a constant average refractive index is obtained. The envelope has a lenticular or eye behaviour (for instance with a distribution of the type termed as "raised Gaussian").

Different apodisation techniques are described, for example, in the article by R. Kashyap, A. Swanton and P. J. Armes: "Simple technique for apodising chirped and unchirped fibre Bragg gratings", Electronics Letters, June 10 1996, Vol. 32, No 13, pages 1226-1227; in the paper by M. Guy, J. Lauzon, M. Palletier, P. Ehbets and D. Asselin: "Simple and flexible technique for spectrally designing all-fibre filter and apodizing fibre gratings", presented at the ECOC'97 conference, September 22 to 25, 1997, Conference Publication No 448, IEE 1997, pages 195 to 198; in the paper by J.J. Pan, F.Q. Zhou, Y. She, S.X. Li: "Effective apodized Phase Mask For Optimum FBGs", presented at the Cleo Europe '98 conference, September 14 to 18, 1998, Glasgow, Scotland, as well as in the paper by H. Singh and M. Zippin: "Apodized fiber Bragg gratings for DWDM applications using uniform phase masks", presented at the ECOC '98 conference, September 20 to 24, 1998, Madrid, Spain, and WO 98/36296.

The prior art of WO 98/36296 describes fabricating a Bragg grating while endeavouring not to lead to an apodisation of the grating, by means of two subsequent exposures of the fiber, upon shifting the interference pattern off the fiber to a second position after the first exposure. The adjustment of the second position, however, is rather complex by positioning a plurality of reflective elements.

All the apodisation techniques described in the above-cited works involve, to a greater or lesser extent, some drawbacks owing to factors such as the complexity/high costs of implementing the apodisation process and/or inaccuracies mainly due to the need of removing the mask and/or longitudinally displacing the fibre or in any case of acting on the fibre itself: said inaccuracies have corresponding negative effects on the characteristics of the grating fabricated in the fibre.

One of the techniques to which reference has been made requires moreover the illumination of the fibre on both sides, what causes important limitations to the structure of the photo-induction optical bench.

This invention aims at providing a technique for the fabrication of apodised gratings in an optical fibre that is not affected by the above drawbacks and can be implemented in a simple, accurate and economical way.

According to this invention, such aim is achieved by virtue of a method having the characteristics recalled in the following claims. The description also describes the related device. The invention allows an adjustment of the apodising position by shifting a single component, with the consequence of higher simplicity and thus less complexity and an easier attainment of high accuracy.

The invention will now be described purely by way of a non-limiting example with reference to the accompanying drawings, wherein:
- Fig. 1 and Fig. 2 schematically show two subsequent phases of implementation of the method according to the invention,
- Fig. 3 shows a variation of Fig. 2,
- Figs. 4 to 10 show typical behaviours of the intensity of the writing radiation and/or of the refractive index of the fibre obtained in the subsequent phases of the method, and
- Fig. 11 schematically illustrates a possible embodiment of a device for implementing the method.

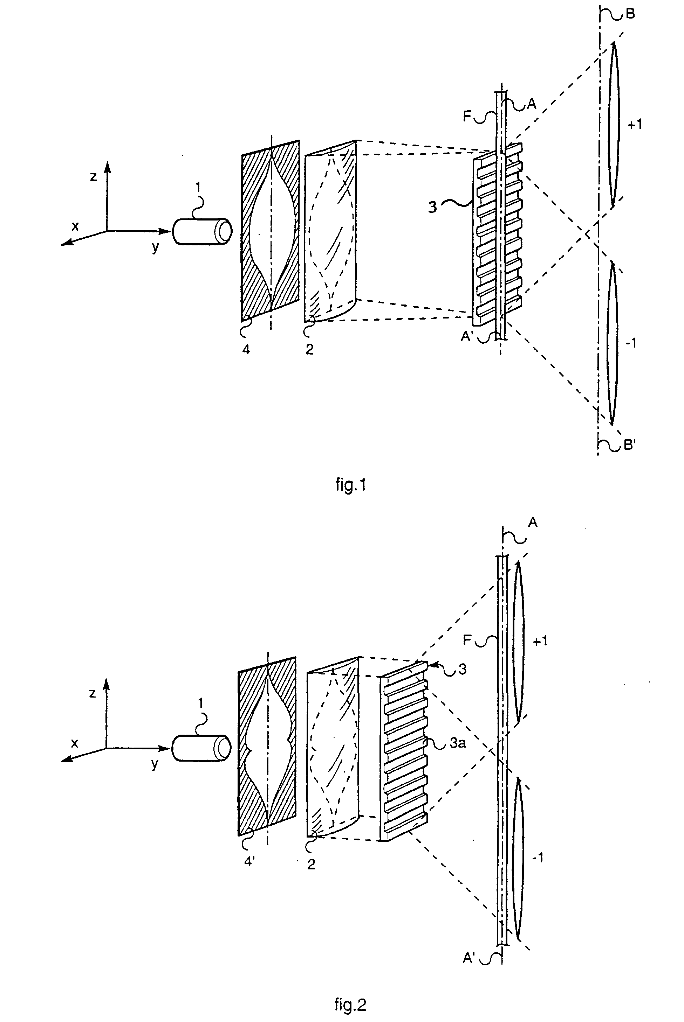

To fabricate a grating such as a Bragg grating in an optical fibre F, the embodiment of the invention being preferred at present requires the use of the following elements:
- a source 1 for the generation of the electromagnetic radiation used for writing the grating in the fibre: it is a monochromatic ultraviolet source (for example an Argon laser, with frequency doubling, so as to have an emission wavelength in the range of about 244 nanometers) having a bi-dimensional profile of the beam intensity that can be for instance, of approximately Gaussian type,
- a lens 2, typically a cylindrical lens, that allows focussing the writing beam outgoing from the source 1 and concentrating it on a focussing axis A-A' which extends in the direction of the z-axis of a Cartesian reference system, shown in Figs. 1,2 and 3,
- a phase mask 3, to be located between the lens 2 and the fibre F, and
- a first and a second interchangeable diaphragms 4, 4', destined to be located between the source 1 and the cylindrical lens 2, according to the criteria that will be further illustrated hereinafter.

The elements 1, 2, 3, 4 (and 4') previously described are mutually aligned along the general direction of propagation of the radiation generated by the source 1. Such propagation direction corresponds to the y-axis of the reference system shown in Figs. 1, 2 and 3. Diaphragm 4 may also be dispensed with, as will be seen later.

The criteria governing the choice of source 1, lens 2 and phase mask 3 are commonly known in the art and therefore do not require to be illustrated here in more detail, also because they are not significant for understanding the invention. This applies also in particular as far as the characteristics of the phase mask 3 are concerned. Said phase mask is provided, on its surface 3a which is destined to face the fibre F; with an array of rectilinear surface etchings, usually arranged in an orthogonal direction to the axis A-A' and therefore, as will be better seen hereinafter, to the axis of the fibre F.

The method according to the invention envisages in the essence a double exposure of the fibre F to the radiation generated by the source 1, without the removal of the mask in both phases.

The first exposure is performed according to the criteria illustrated in Fig. 1: the fibre F is arranged along the focal axis A-A' of the lens 2 and the phase mask 3 is located in proximity - usually in direct contact - of the fibre F and lies in a plane orthogonal to the y-axis, i. e. the direction of propagation of the writing radiation arriving from the source 1 and concentrated by the lens 2.

Still in Fig. 1, references "+1" and "-1" schematically show the corresponding first orders of diffraction of the phase mask, that present an interference region in which the fibre F must be located so as to originate the desired effect of intensity modulation of the writing radiation incident on the fibre, with the consequent corresponding modulation of the refractive index of the same fibre.

As already mentioned, the beam of the ultraviolet radiation outgoing from the source 1 usually has an approximately Gaussian bi-dimensional intensity profile. Before being concentrated, through the lens 2, on the core of the fibre F, the beam is shaped by the diaphragm 4 that has the most appropriate form for the specific case. The diaphragm 4 is so designed (in a known way) that it allows the radiation beam to have, in the focus of the cylindrical lens 2 and in the direction parallel to the focal axis A-A' (hence along the axis of the fibre core) an intensity profile that can be represented by the desired mathematical function.

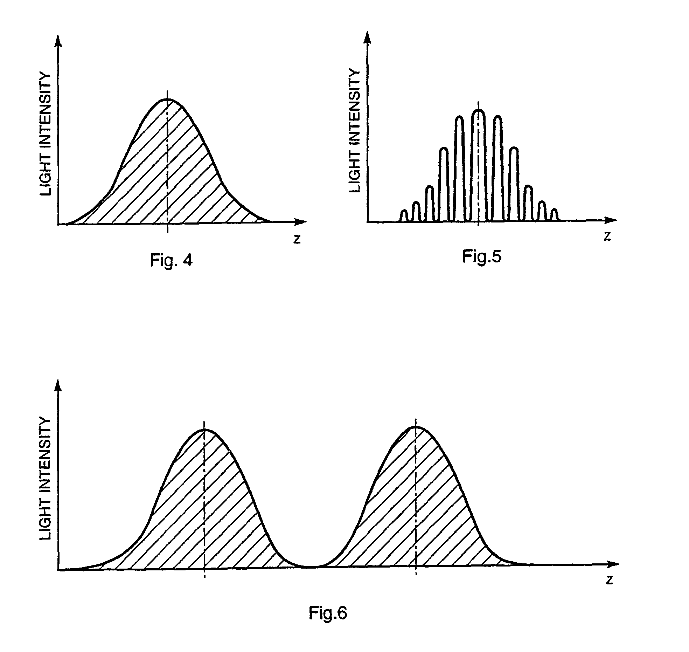

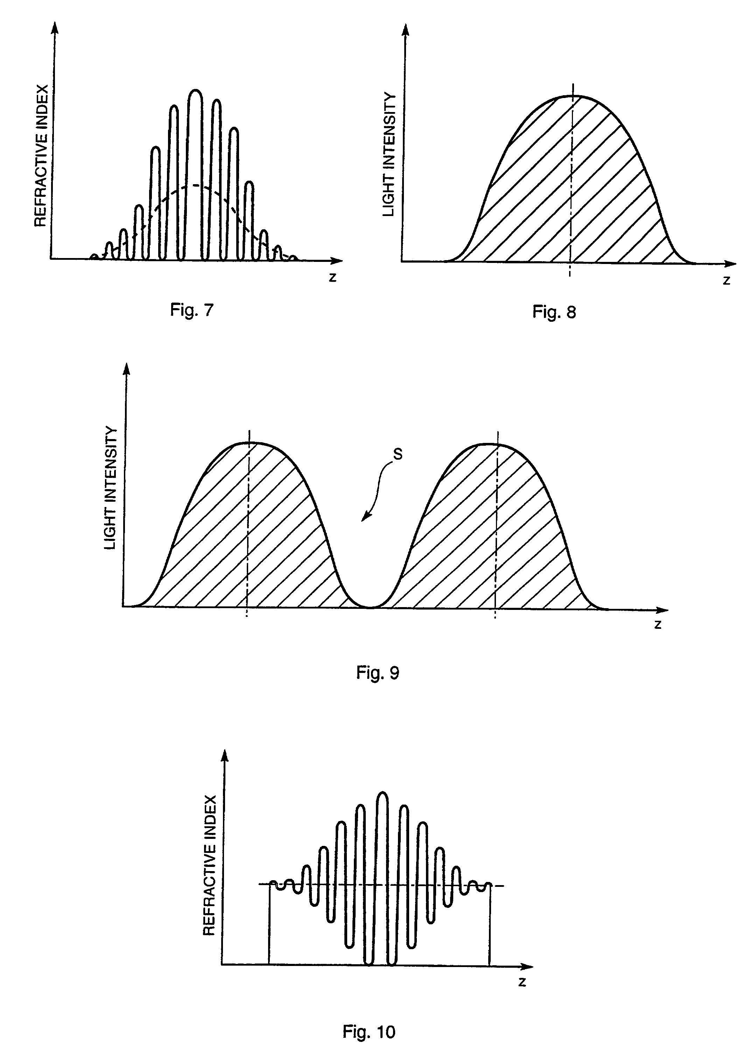

Fig. 1 shows, by way of example, a diaphragm with an opening defined by two Gaussian curves, symmetrical with respect to an axis oriented according the z-axis, so as to ideally obtain a Gaussian profile of the light intensity along the optical axis A-A' in the absence of the phase mask 3. This profile can be seen in Fig. 4. Fig. 5 shows instead the effect of the phase mask 3, positioned in contact with or in proximity of the fibre F. In practice the mask produces a modulation of the intensity of the writing radiation incident on the fibre core, causing in such core a modulation of the refractive index with a behaviour of the type represented in Fig. 7, where the envelope and the average value have a substantially Gaussian behaviour.

In Figs. 4 and 5, as well as in all the subsequent Figures, the abscissa axis of the diagrams actually corresponds to z-axis of the Cartesian reference system of Figs. 1 to 3. In particular, Fig. 6 shows the behaviour of the radiation intensity, as it may be detected in the configuration of Fig. 1 along a straight line B-B' parallel to the axis A-A' and aligned or substantially aligned with the same axis A-A' in the direction y of propagation of the writing radiation. The distance between the straight lines B-B' and A-A' is bound to the length of the grating. For instance, the straight line B-B' may be located at a distance of about 10-20 mm from the axis A-A' for a grating 5-10 mm long, respectively. It is in practice a sufficient distance to allow that, in coincidence with the straight line B-B', there are no longer the effects of reciprocal interference between the diffraction orders +1 and -1 induced by the presence of the phase mask. It will be appreciated that along this straight line the intensity profile of the radiation that can be detected corresponds in practice to two bells, each of them with a Gaussian profile (in the example shown) with at the most a slight additive effect, which is practically negligible, in coincidence with the overlapping of the reciprocally internal tails of both bells.

It will be further appreciated that the use of the diaphragm 4, albeit preferred in the exemplary embodiment illustrated here, is in no way mandatory. This applies at least in the event in which the spatial distribution of intensity of the radiation generated by the source 1 exhibits a profile regarded as satisfactory in itself (whether Gaussian or not). Obviously, if use of an intensity profile different from that of the source is desired for fibre writing, a diaphragm 4 will be adopted such as to originate such a different profile.

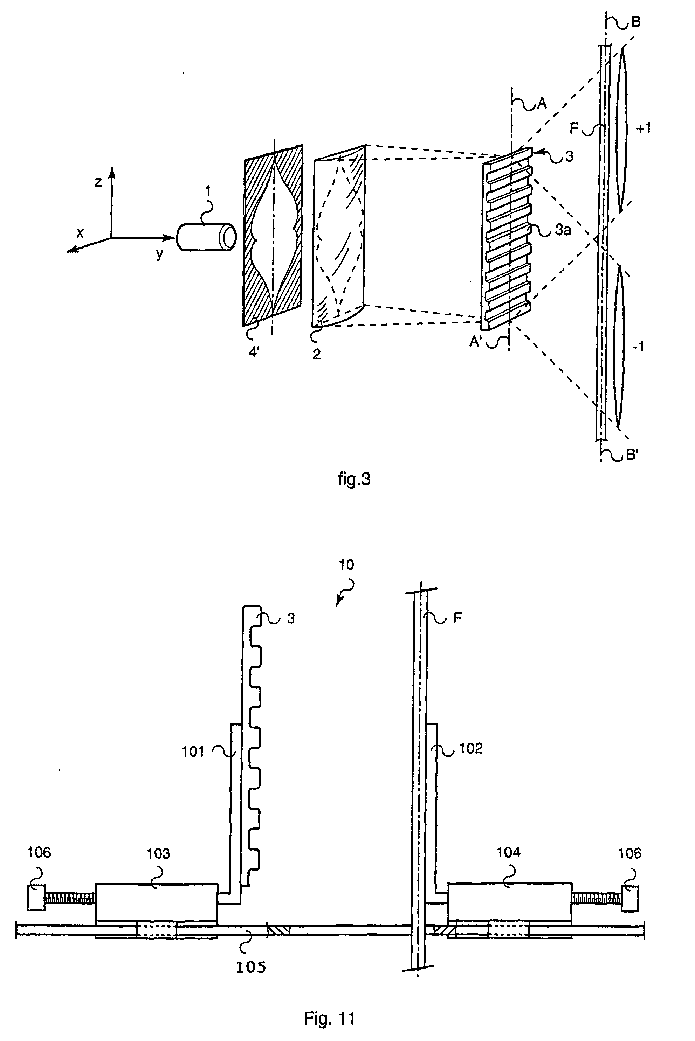

In the second phase of the method, represented - according to two possible embodiments - in Figs. 2 and 3, a relative displacement is performed between the fibre F and the phase mask 3 so that the fibre F lies in a region in which the diffraction orders +1 and -1 of phase mask 3 no longer interfere. Fig. 6 refers to those conditions.

This result can be achieved by keeping the mask 3 in the focus of lens 2 and displacing the fibre F so that its axis coincides with straight line B-B', as shown in Fig. 3. An equivalent and presently preferred solution is shown in Fig. 2: the fibre F is kept in the focus of the cylindrical lens 2 whilst the mask 3 is positioned in such a way that the axis B-B' of Fig. 1 coincide with A-A'. Regardless of the solution being adopted, the above relative displacement is usually performed with the source 1 switched off, so that during the above displacement the fibre F is not exposed to the writing radiation.

In any case, the above displacement is a relative one, in the sense that the same may be performed by keeping stationary the set-up formed by lens 2 and phase mask 3 (and usually by source 1) and moving the fibre F (as in Fig 3); or by keeping stationary the fibre F and lens 2 and displacing the mask (as in Fig. 2); or yet by displacing both sets of parts involved. The displacements of the fibre and/or of the mask may be performed by means of translation devices of known type, such as micrometric-screw devices, piezoelectric translators, etc. The choice also depends on the extent of the displacement.

The above relative displacement corresponds in practice to a relative spacing apart of fibre F with regard to phase mask 3 in orthogonal direction to the plane of the same mask. It is therefore a displacement that may be performed with accuracy much higher than any longitudinal translation of the fibre F with respect to the phase mask. As already set forth in the introductory part of this description, just the inaccuracies bound to such longitudinal displacement are the reason of the inaccuracies present in some apodisation methods according the known technique.

As far as the practical implementation of such relative displacement is concerned, different solutions are available.

For instance, Fig. 11 shows a positioning device 10 in which the phase mask 3 is mounted on a frame made in the vertical arm of an L-shaped element 101, whereas the fibre F is mounted on a second L-shaped element 102. The horizontal arms of the above elements 101, 102 are then mounted on respective slides 103, 104, sliding on a same horizontal guide 105. It is also possible to remove the slide 103 carrying the mask 3 from the guide 105 or in any case to move it away from the fibre holder 102 to the extent required to allow replacing the phase mask. The actuation elements (typically micrometric screws) of the slides 103,104 are denoted by 106. The displacement devices mentioned here are quite conventional and do not require to be here described in detail.

Concurrently with the relative displacement of the fibre F and the phase mask 3, in order to proceed to the second phase of exposure of the fibre F by the source 1, the previously used diaphragm 4 (if any) is replaced by the diaphragm 4', so designed as to give rise along the focussing axis A-A' of the lens 2, in the absence of phase mask 3, to a light intensity profile which - if the first exposure has been performed with a Gaussian intensity profile - is of the type illustrated in Fig. 8 and can be defined as complementary-Gaussian. This term indicates a bell-shaped profile whose flanks have a behaviour substantially similar to that of the flank of a Gaussian curve with its vertex coincident with the abscissa axis.

Fig. 9 shows the behaviour of the radiation intensity as it may be detected, during the second exposure phase, along the axis of the fibre F in the presence of the phase mask 3. The effect of presence of the mask is just that of originating, through the diffraction orders +1 and -1, no longer reciprocally interfering, an intensity profile formed by two curves that have an "additively complementary-Gaussian" behaviour.

The term "additively complementary-Gaussian" indicates the fact that, as may be better noted in Fig. 9, the intensity profiles corresponding to the two diffraction orders +1 and -1 (each substantially corresponding to a profile of the type illustrated in Fig. 8) define, in the region S comprised between the two respective maximum values, profiles of which the sum is exactly complementary to a Gaussian profile.

As already said, Fig. 7 represents the behaviour of the refractive index obtained in the core of the fibre F through the first exposure, that has been performed according to the modalities shown in Fig.1.

The effect of the second exposure phase, performed acting with the set-up shown in Fig. 2 or Fig. 3 is therefore that of "adding", to the behaviour of the refractive index shown in Fig. 7, a complementary-Gaussian behaviour of the type obtained in the region S of the intensity diagram of Fig. 9.

The overall result is then the overlapping, in an additive sense, of a complementary-Gaussian to the behaviour of the refractive index represented in Fig. 7, in order to achieve as a final result a behaviour of the type represented in Fig. 10. Here the refractive index of the fibre core has an oscillating behaviour around a given average value (with frequencies defined by the characteristics of the phase mask 3 during the first exposure) and an overall envelope having an eye behaviour of the type commonly called "raised Gaussian". Such a behaviour of the refractive index corresponds, as is known in the art and illustrated in the various prior-art documents mentioned in the introductory part of this description, to the attainment of the desired apodisation effect. It is however evident that the achievement of such a result takes for granted that the "raising" of the refractive index obtained during the second exposure has a sufficient value (in terms of index variation). This requires the corresponding tuning of the intensity of the writing radiation and/or of the exposure time. This operation takes place in any case according to well-known criteria, the description of which is not required here.

It is evident that, while the principle of the invention remains unchanged, the construction details and the embodiments may be considerably varied with respect to what is described and depicted herein, without thereby departing from the scope of the invention itself, as defined in the claims.

In particular the detailed description given above refers to the attainment of refractive index behaviours with a Gaussian envelope: it however wholly evident that the same solution may be adopted by intervening - in a known manner - on the various elements of the system which have been illustrated, so as to achieve the desired apodisation effect also with behaviours of a different type. It follows that what has been previously said regarding the optional and non-mandatory character of the use of the first diaphragm 4 applies - mutatis mutandis - to the second diaphragm 4'.

Furthermore, the method and the devices described here may be applied also to the simultaneous apodisation of gratings which are photo-induced simultaneously on more fibres parallelly aligned around the axis A-A', according to the criteria described in EP-A 0 880 042.

## Claims

1. Method of fabricating apodised gratings in optical fibres (F), in which at least one fibre (F) is submitted to a double exposure of focussed writing radiation (1) through a phase mask (3), wherein the first exposure is performed with the phase mask (3) being located in proximity of the fibre (F) and producing interference fringes spatially modulating the intensity of the writing radiation, and the second exposure is performed after the fibre (F) has been spaced apart from the phase mask (3) in the direction (y) of propagation of the writing radiation (1) by such a distance that the fibre (F) lies in a region where the radiation incident on the fibre (F) is substantially defined by the first diffraction orders generated by the phase mask (3) in the practical absence of reciprocal interference among said first orders, the first and the second exposure of the fibre (F) to the writing radiation through the phase mask (3) being sequentially performed, **characterized in that** it comprises the operation of focussing said writing radiation by means of a lens (2) along a focal axis (A-A'), **in that** during said first exposure, the fibre (F) is substantially placed in correspondence with said focal axis (A-A') within an interference region of the +1st order and the -1st order diffraction beam directly adjacent the phase mask (3), and **in that** for the second exposure, the phase mask (3) and/or the fibre (F) are displaced relative to each other in a direction orthogonal to the plane of the phase mask while remaining in parallel and while keeping the fibre longitudinally stationary.

2. Method according to claim 1, **characterised in that** it comprises the operation of shaping the intensity profile of said writing radiation, at least during said second exposure, by a diaphragm (4, 4').

3. Method according to claim 2, **characterised in that** for said second exposure, said diaphragm (4') is chosen in such a way as to give a profile to the radiation intensity defined by said first orders such that the intensity profiles corresponding to the two diffraction orders +1 and -1 in a region comprised between the two respective maximum values define profiles of which the sum is complementary to a Gaussian profile.

4. Method according to any of the previous claims, **characterised in that** during said second exposure the fibre (F) is substantially located in correspondence with said focal axis (A-A') and the displacement between the fibre (F) and the phase mask (3) is obtained by translation of said phase mask (3).

5. Method according to any of claims 1 to 3, **characterised in that** during said second exposure, the fibre (F) is placed along a straight line (B-B') that is parallel to and spaced apart from said focal axis (A-A').

6. Method according to any of the previous claims, **characterised in that** during said first exposure the fibre (F) is positioned in contact with the phase mask (3).

7. Method according to any of the previous claims, **characterised in that** it comprises the operation of inhibiting the action of said writing radiation on the fibre (F) between said first and said second exposure.

8. Method according to any of the previous claims, **characterised in that** said writing radiation exhibits a bi-dimensional intensity profile that is approximately Gaussian.

9. Method according to any of the previous claims, **characterised in that** each one of said first and second exposures is performed simultaneously on a plurality of fibres, arranged side by side on the same plane.

10. Method according to any of claims 1 to 9, **characterised in that** said writing radiation is focussed along said focal axis (A-A') by means of a cylindrical lens.

## Patentansprüche

1. Verfahren zum Herstellen von apodisierten Gittern in optischen Fasern (F), bei dem man wenigstens eine Faser (F) einer doppelten Belichtung durch eine Phasenmaske (3) hindurch mit einer fokussierten Schreibstrahlung (1) unterwirft, wobei die erste Belichtung erfolgt, während die Phasenmaske (3) in der Nähe der Faser (F) angeordnet ist und Interferenzstreifen erzeugt, die die Intensität der Schreibstrahlung räumlich modulieren, und die zweite Belichtung erfolgt, nachdem die Faser (F) von der Phasenmaske (3) in der Richtung (y) des Fortschreitens der Schreibstrahlung (1) um eine solche Weite entfernt worden ist, daß die Faser (F) in einem Bereich liegt, in dem die auf der Faser (F) einfallende Strahlung im wesentlichen durch die ersten Brechungsordnungen begrenzt ist, die durch die Phasenmaske (3) bei praktischer Abwesenheit von reziproker Interferenz unter den ersten Ordnungen erzeugt werden, wobei man die erste und die zweite Belichtung der Faser (F) mit der Schreibstrahlung durch die Phasenmaske (3) aufeinanderfolgend durchführt, **dadurch gekennzeichnet, daß** es die Operation umfaßt, die Schreibstrahlung mit Hilfe einer Linse (2) entlang einer gegebenen Fokalachse (A-A') zu fokussieren, und daß während der ersten Belichtung die Faser (F) im wesentlichen in Übereinstimmung mit der Fokalachse (A-A') in einem interferierenden Bereich des Brechungsbündels der + 1sten Ordnung und der -1sten Ordnung unmittelbar angrenzend an die Phasenmaske (3) angeordnet ist und für die zweite Belichtung die Phasenmaske (3) und/oder die Faser (F) relativ zueinander in einer Richtung orthogonal zur Ebene der Phasenmaske verschoben werden, wobei sie parallel bleiben und die Faser in Längsrichtung stationär bleibt.

2. Verfahren nach Anspruch 1, **dadurch gekennzeichnet, daß** es die Operation des Formens des Intensitätsprofils der Schreibstrahlung durch eine Blende (4, 4') wenigstens während der zweiten Belichtung umfaßt.

3. Verfahren nach Anspruch 2, **dadurch gekennzeichnet, daß** für die zweite Belichtung die Blende (4') so gewählt ist, daß sie der durch die ersten Ordnungen begrenzten Strahlungsintensität ein solches Profil gibt, daß die den beiden Brechungsordnungen +1 und -1 entsprechenden Intensitätsprofile in einem Bereich, der zwischen den beiden jeweiligen Maxima liegt, Profile begrenzen, deren Summe komplementär zu einem Gauß'schen Profil ist.

4. Verfahren nach einem der vorhergehenden Ansprüche, **dadurch gekennzeichnet, daß** während der zweiten Belichtung die Faser (F) im wesentlichen in Übereinstimmung mit der Fokalachse (A-A') angeordnet ist und der Versatz zwischen der Faser (F) und der Phasenmaske (3) durch eine Verschiebung der Phasenmaske (3) erhalten wird.

5. Verfahren nach einem der Ansprüche 1 bis 3, **dadurch gekennzeichnet, daß** während der zweiten Belichtung die Faser (F) entlang einer geraden Linie (B-B') angeordnet wird, die parallel zur Fokalachse (A-A') verläuft und von dieser einen Abstand hat.

6. Verfahren nach einem der vorhergehenden Ansprüche, **dadurch gekennzeichnet, daß** während der ersten Belichtung die Faser (F) in Kontakt mit der Phasenmaske (3) angeordnet ist.

7. Verfahren nach einem der vorhergehenden Ansprüche, **dadurch gekennzeichnet, daß** es die Operation der Sperrung der Wirkung der Schreibstrahlung auf die Faser (F) zwischen der ersten und der zweiten Belichtung umfaßt.

8. Verfahren nach einem der vorhergehenden Ansprüche, **dadurch gekennzeichnet, daß** die Schreibstrahlung ein zweidimensionales Intensitätsprofil aufweist, das angenähert ein Gauß'sches Profil ist.

9. Verfahren nach einem der vorhergehenden Ansprüche, **dadurch gekennzeichnet, daß** sowohl die erste als auch die zweite Belichtung gleichzeitig an einer Mehrzahl von Fasern durchgeführt werden, die Seite an Seite in der selben Ebene angeordnet sind.

10. Verfahren nach einem der Ansprüche 1 bis 9, **dadurch gekennzeichnet, daß** die Schreibstrahlung entlang der Fokalachse (A-A') mit Hilfe einer Zylinderlinse fokussiert wird.

## Revendications

1. Méthode de fabrication de réseaux apodisés sur fibres optiques (F), dans laquelle au moins une fibre (F) est soumise à une double exposition de rayonnement d'écriture (1) focalisé par l'intermédiaire d'un masque de phase (3), et dans laquelle la première exposition est effectuée alors que le masque de phase (3) est placé à proximité de la fibre (F) et produit des franges d'interférence modulant spatialement l'intensité du rayonnement d'écriture, et la deuxième exposition est effectuée après que la fibre (F) ait été espacée du masque de phase (3) dans la direction (y) de propagation du rayonnement d'écriture (1), d'une distance telle que la fibre (F) est située dans une région dans laquelle le rayonnement incident de la fibre (F) est sensiblement défini par les diffractions de premier ordre générées par le masque de phase (3) en absence pratique d'interférence réciproque parmi lesdits premiers ordres, la première et la deuxième exposition de la fibre (F) au rayonnement d'écriture par l'intermédiaire du masque de phase (3) étant effectuées séquentiellement, **caractérisée en ce qu'**elle comprend l'opération de focalisation dudit rayonnement d'écriture au moyen d'une lentille (2) sur un axe focal (A-A'), **en ce que**, durant ladite première exposition, la fibre (F) est sensiblement placée en correspondance avec ledit axe focal (A-A') dans une région à interférence du faisceau de diffraction de premier ordre positif et de premier ordre négatif, de façon directement adjacente au masque de phase (3), et **en ce que**, pour la deuxième exposition, le masque de phase (3) et/ou la fibre (F) sont déplacés l'un par rapport à l'autre dans une direction perpendiculaire au plan du masque de phase, tout en restant en parallèle et tout en conservant la fibre longitudinalement stationnaire.

2. Méthode selon la revendication 1, **caractérisée en ce que** qu'elle comprend l'opération de conformation du profil d'intensité dudit rayonnement d'écriture, au moins durant ladite deuxième exposition, à l'aide d'un diaphragme (4, 4').

3. Méthode selon la revendication 2, **caractérisée en ce que**, pour ladite deuxième exposition, ledit diaphragme (4') est choisi de manière à donner, à l'intensité de rayonnement, un profil défini par lesdits premiers ordres, de manière que les profils d'intensité correspondant aux deux ordres de diffraction +1 et -1 dans une région comprise entre les deux valeurs maximales respectives définissent des profils dont la somme est complémentaire à un profil Gaussien.

4. Méthode selon l'une quelconque des revendications précédentes, **caractérisée en ce que**, durant ladite deuxième exposition, la fibre (F) est placée sensiblement en correspondance avec ledit axe focal (A-A') et le déplacement entre la fibre (F) et le masque de phase (3) est obtenu par translation dudit masque de phase (3).

5. Méthode selon l'une quelconque des revendications 1 à 3, **caractérisée en ce que**, durant ladite deuxième exposition, la fibre (F) est placée le long d'une ligne droite (B-B') parallèle à et espacée dudit axe focal (A-A').

6. Méthode selon l'une quelconque des revendications précédentes, **caractérisée en ce que**, durant ladite première exposition, la fibre (F) est placée en contact avec le masque de phase (3).

7. Méthode selon l'une quelconque des revendications précédentes, **caractérisée en ce qu'**elle comprend l'opération d'inhibition de l'action dudit rayonnement d'écriture sur la fibre (F) entre ladite première et ladite deuxième exposition.

8. Méthode selon l'une quelconque des revendications précédentes, **caractérisée en ce que** ledit rayonnement d'écriture manifeste un profil d'intensité bi-dimensionnel qui est approximativement Gaussien.

9. Méthode selon l'une quelconque des revendications précédentes, **caractérisée en ce que** chacune desdites première et deuxième expositions est effectuée simultanément sur une pluralité de fibres, agencées côte à côte sur le même plan.

10. Méthode selon l'une quelconque des revendications 1 à 9, **caractérisée en ce que** ledit rayonnement d'écriture est focalisé le long dudit axe focal (A-A'), au moyen d'une lentille cylindrique.
